(19) Europäisches Patentamt

European Patent Office

Office européen des brevets

(11) EP 0 706 973 B1

(12) **FASCICULE DE BREVET EUROPEEN**

(45) Date de publication et mention
de la délivrance du brevet:
**17.03.1999 Bulletin 1999/11**

(51) Int. Cl.$^6$: **C01B 35/06**

(21) Numéro de dépôt: **95401990.7**

(22) Date de dépôt: **01.09.1995**

(54) **Fabrication de solutions aqueuses d'acide tetrafluoroborique**

Herstellung von wässrigen Tetrafluoroborsäurelösungen

Preparation of aqueous solutions of tetrafluoroboric acid

(84) Etats contractants désignés:
**AT BE CH DE ES FR GB IT LI NL**

(30) Priorité: **11.10.1994 FR 9412114**

(43) Date de publication de la demande:
**17.04.1996 Bulletin 1996/16**

(73) Titulaire: **ELF ATOCHEM S.A.**
**92800 Puteaux, Hauts-de-Seine (FR)**

(72) Inventeurs:
• **Duclaux, Jacky**
**F-38780 Eyzin-Pinet (FR)**
• **Pralus, Christian**
**F-69450 Saint Cyr au Mont d'Or (FR)**

(74) Mandataire:
**Leboulenger, Jean et al**
**Elf Atochem S.A.,**
**Département Propriété Industrielle,**
**Cedex 42 - La Défense 10**
**92091 Paris la Défense (FR)**

(56) Documents cités:
**EP-A- 0 364 815            FR-A- 1 186 281**

• **CHEMICAL ABSTRACTS, vol. 100, no. 18, 30
Avril 1984 Columbus, Ohio, US; abstract no.
141594s, page 137; & PL-A-116 040
(POZNANSKIE ZAKLADY NAWOZOW
FOSFOROWYCH) 31 Août 1983**

**Description**

La présente invention concerne le domaine du trifluorure de bore et de l'acide tétrafluoroborique et a plus particulièrement pour objet la transformation des effluents industriels d'hydrate de trifluorure de bore en solutions aqueuses d'acide tétrafluoroborique.

Le trifluorure de bore est principalement utilisé dans l'industrie comme catalyseur dans de très nombreuses réactions telles que polymérisation, estérification, alkylation, isomérisation, notamment comme catalyseur de polymérisation d'oléfines. Pour éviter des rejets fluoroborés, le trifluorure de bore usé est généralement récupéré, en sortie de réaction, sous forme de solutions d'hydrate de $BF_3$ obtenues, d'une part, par mise en contact du $BF_3$ avec de l'eau et, d'autre part, par lavage à l'eau des composés organiques formés dans la réaction catalysée par $BF_3$ et qui, en raison de la présence de diverses impuretés minérales et organiques, sont généralement plus ou moins colorées, leur teneur en carbone organique pouvant aller de quelques ppm à quelques centaines de ppm.

Jusqu'à présent, ces solutions aqueuses sont soit rejetées à la rivière après dilution, soit soumises à des traitements coûteux pour les transformer en produits inoffensifs vis-à-vis de l'environnement ou pour récupérer et purifier le $BF_3$ en vue de son recyclage. De tels traitements sont décrits, par exemple, dans les brevets JP 52/68754, JP 53/96260, JP 56/166987, EP 364 815, US 4 911 758 et 4 981 578.

L'acide tétrafluoroborique est par ailleurs un produit commercial intéressant, utilisé notamment comme intermédiaire dans la fabrication de fluoroborates, dans le polissage électrolytique de l'aluminium, dans le traitement de surfaces (décapage) et dans le traitement des circuits imprimés. Il est généralement commercialisé sous forme de solutions aqueuses ; les spécifications requises par les utilisateurs imposent une teneur en $HBF_4$ d'au moins 49 % en poids, une teneur en acide borique ($H_3BO_3$) comprise entre 0,1 et 8 % en poids et l'absence de coloration.

Il a maintenant été trouvé un procédé permettant, à partir d'effluents aqueux colorés d'hydrate de $BF_3$, de fabriquer des solutions aqueuses d'acide tétrafluoroborique répondant aux spécifications commerciales. Ce procédé est particulièrement intéressant puisqu'on obtient un produit à haute valeur ajoutée en résolvant un problème d'environnement.

L'invention a donc pour objet un procédé pour la fabrication d'une solution aqueuse d'acide tétrafluoroborique à partir d'un effluent aqueux coloré d'hydrate de trifluorure de bore, caractérisé en ce que :

*a)* on ajoute à l'effluent une solution aqueuse d'acide fluorhydrique en une quantité suffisante pour transformer complètement le trifluorure de bore en acide tétrafluoroborique,
*b)* on ajoute ensuite à la solution obtenue de l'eau et une quantité suffisante d'acide borique pour neutraliser l'éventuel excès d'acide fluorhydrique et obtenir une teneur en acide borique comprise entre 0,1 et 8 % en poids et une teneur en acide fluoroborique supérieure à 49 % en poids, puis
*c)* on met la solution obtenue en contact avec un charbon actif en une quantité suffisante et pendant un temps suffisant pour amener la teneur en carbone organique de la solution à 30 ppm ou moins, et
*d)* on sépare le charbon actif de la solution incolore d'acide tétrafluoroborique.

La teneur en $BF_3$ des effluents à traiter peut varier dans de larges limites (47 à 65,3 % en poids). Puisque la concentration en $HBF_4$ de la solution finale d'acide tétrafluoroborique est directement liée à la teneur en $BF_3$ de l'effluent à traiter, on peut éventuellement soumettre ce dernier à une étape préalable de concentration par distillation sous vide des solutions d'hydrate de $BF_3$.

La quantité d'HF à utiliser dans la première étape, destinée à transformer l'hydrate de trifluorure de bore en acide tétrafluoroborique selon la réaction :

$$BF_3, xH_2O + HF \rightarrow HBF_4 + xH_2O$$

dépend évidemment de la teneur en $BF_3$ de l'effluent à traiter et doit être au moins égale à la quantité stoechiométrique correspondant à la teneur en bore de l'effluent. Pour être sûr d'obtenir une transformation complète du bore présent dans l'effluent, il est recommandé d'utiliser un léger excès d'HF (2 à 5 % par rapport à la stoechiométrie).

Pour obtenir une solution finale d'acide tétrafluoroborique supérieure à 49 % en poids, la concentration en HF de la solution aqueuse d'acide fluorhydrique doit être au moins de 70 % en poids.

L'addition d'HF à l'effluent peut être effectuée à une température comprise entre 10 et 35°C, mais on préfère opérer entre 20 et 30°C.

La quantité d'acide borique à utiliser dans la deuxième étape doit être suffisante pour, d'une part, neutraliser l'éventuel excès d'HF selon la réaction :

$$4HF + H_3BO_3 \rightarrow HBF_4 + 3H_2O$$

et, d'autre part, amener la teneur en $H_3BO_3$ de la solution d'acide tétrafluoroborique à une valeur satisfaisant aux spécifications commerciales, c'est-à-dire entre 0,1 et 8 % en poids, de préférence entre 0,1 et 6 %.

L'efficacité d'un charbon actif pouvant varier considérablement en fonction de la nature et de la quantité d'impuretés présentes dans les solutions aqueuses d'hydrates de $BF_3$, il n'est pas possible d'indiquer précisément la quantité de charbon actif à utiliser. Cependant, pour un charbon actif donné, cette quantité peut être facilement déterminée par quelques tests préliminaires consistant à faire varier la quantité de charbon actif et à mesurer la teneur en carbone de la solution d'$HBF_4$ traitée. Il a en effet été observé qu'on obtient une décoloration stable dans le temps lorsque la teneur en carbone de la solution d'$HBF_4$ n'excède pas 30 ppm.

Selon l'efficacité absorbante du charbon actif, le temps de contact entre le charbon actif et la solution d'acide tétrafluoroborique à décolorer peut aller de quelques minutes à quelques heures.

Après cette mise en contact, le charbon actif peut être séparé par tout moyen tel que, par exemple, décantation, filtration, centrifugation.

En raison de l'agressivité des différents produits mis en oeuvre ou synthétisés, toutes les étapes du procédé selon l'invention doivent impérativement être réalisées dans un appareillage en matériaux plastiques (polyéthylène, polypropylène, PTFE, PVDF) ou revêtu de tels matériaux.

Les exemples suivants illustrent l'invention sans la limiter. Sauf indication contraire, les pourcentages sont exprimés en poids.

## EXEMPLE 1

Dans un récipient en polypropylène, on a introduit 500 g d'un effluent aqueux d'hydrate de $BF_3$, se présentant sous forme d'un liquide marron clair et ayant une teneur en bore de 8,5 % et une teneur en fluor de 44,4 %. Sous agitation au moyen d'un barreau magnétique gainé en Teflon®, on a ensuite ajouté en une heure 115 g d'une solution aqueuse à 71,7% d'acide fluorhydrique, tout en maintenant la température du mélange entre 20 et 30°C par refroidissement extérieur.

A 600 g de la solution ainsi obtenue (614,6 g) ayant une teneur en $HBF_4$ de 55 % et en HF de 1 %, on a ensuite ajouté à 20-25°C et en une minute 55,6 g d'eau bipermutée et 11,2 g d'acide borique pour obtenir 666 g d'une solution contenant 50,5 % d'$HBF_4$ et 0,9 % d'$H_3BO_3$.

A cette solution de couleur ocre, on a ensuite ajouté 20 g d'Acticarbone ® 2S, un charbon actif commercialisé par la Société CECA et présentant les caractéristiques moyennes suivantes :

Indice de mélasse : 166
Humidité à l'ensachage : 2,1 %
Teneur en cendres : 3,5 %
Indice d'iode : 125
Indice de bleu de méthylène : 13
pH : > 9
Surface BET : 1150 $m^2$/g
Densité en place en silo : 290 kg/$m^3$

Après avoir maintenu sous agitation pendant 30 minutes, le charbon a été séparé par filtration, d'abord sur un filtre du type Büchner en PVDF muni d'une toile Fyltis ® en polypropylène(réf. 02601 CB), puis sur un filtre Millipore équipé d'une membrane PVDF hydrophile (Durapore ® GVWP 04700 - Dimension de pore = 0,22 µm).

La solution d'acide tétrafluoroborique ainsi obtenue était incolore. Sa teneur en carbone, déterminée par un analyseur de carbone SHIMADZU TOC 5000, était de 23 ppm. Aucune recoloration n'était observée après l'addition de 7 g d'une solution aqueuse à 50 % d'$H_2O_2$ à 1000 g de la solution d'$HBF_4$.

Le tableau suivant résume les résultats obtenus en opérant comme précédemment avec des quantités variables d'Acticarbone 2S.

| Quantité (g) d'Acticarbone 2S par kg de solution | Caractéristiques de la solution d'HBF$_4$ | | |
|---|---|---|---|
| | Teneur en carbone (ppm) | Aspect initial | Aspect après addition d'H$_2$O$_2$ |
| 10 | 165 | incolore | marron |
| 20 | 54 | incolore | jaune pâle |
| 30 | 23 | incolore | incolore |
| 40 | 19 | incolore | incolore |
| 60 | 14 | incolore | incolore |

## EXEMPLE 2

On a opéré comme à l'exemple 1 à partir d'un effluent de couleur jaune orangé, ayant une teneur en bore de 9 % et une teneur en fluor de 46,4 %.

Pour 1500 g de cet effluent, on a utilisé :

- 365 g de solution aqueuse d'HF à 71,3 %
- 224,4 g d'eau bipermutée
- 56,5 g d'acide borique

Avant traitement au charbon actif, la solution d'acide tétrafluoroborique obtenue titrait 51 % en HBF$_4$ et 1,3 % en H$_3$BO$_3$ et se présentait sous forme d'un liquide jaune orangé.

Le traitement de décoloration a été effectué en utilisant des quantités variables d'Acticarbone 2S. Le tableau suivant rassemble les résultats obtenus.

| Quantité (g) d'Acticarbone 2S par kg de solution | Caractéristiques de la solution d'HBF$_4$ | | | |
|---|---|---|---|---|
| | Teneur en carbone (ppm) | Aspect initial | Aspect après addition d'H$_2$O$_2$ | Aspect après 6 mois de stockage * |
| 1,4 | 37 | incolore | jaune très pâle | jaune très pâle |
| 2,5 | 28 | incolore | incolore | incolore |
| 3,5 | 26 | incolore | incolore | incolore |
| 7 | 19 | incolore | incolore | incolore |
| 14 | 16 | incolore | incolore | incolore |

* Stockage à la lumière et à température ambiante, en flacons de polyéthylène translucide.

## EXEMPLE 3 (Comparatif)

On a mélangé 1000 g du même effluent qu'à l'exemple 2 avec 3,5 g de charbon Acticarbone 2S. Après maintien sous agitation pendant 30 minutes et séparation du charbon actif par filtration, on a obtenu une solution incolore ayant une teneur en carbone de 44 ppm.

Cette solution aqueuse incolore d'hydrate de BF$_3$ a été divisée en 2 lots qui ont été transformés en HBF$_4$, l'un (Lot A) immédiatement après la décoloration et l'autre (Lot B) après 30 jours de stockage à la lumière dans un récipient de polyéthylène.

### a) Fabrication de HBF₄ immédiatement après décoloration

Cette fabrication à partir du lot A a consisté en :

- l'addition d'HF 70 % avec un excès d'environ 5 % par rapport à la stoechiométrie pour transformer tout le $BF_3$ du milieu,
- l'addition d'eau bipermutée et d'acide borique afin d'obtenir une solution de $HBF_4$ titrant 51 % en $HBF_4$ et 1,3 % en $H_3BO_3$.

La teneur en carbone de cette solution de $HBF_4$ était de 30 ppm. Après 30 jours de stockage à la lumière, cette solution était jaune très pâle.

### b) Fabrication de HBF₄ à partir du Lot B

Après 30 jours de stockage à la lumière dans un récipient de polyéthylène, le lot B s'était progressivement recoloré en jaune. Il a alors été transformé en $HBF_4$ en procédant comme décrit précédemment pour le Lot A. On a ainsi obtenu une solution de $HBF_4$ ayant une teneur en carbone de 30 ppm, de couleur jaune pâle.

## Revendications

1.   Procédé de fabrication d'une solution aqueuse d'acide tétrafluoroborique à partir d'un effluent aqueux coloré d'hydrate de trifluorure de bore, caractérisé en ce qu'il consiste :

   a) à ajouter à l'effluent une solution aqueuse d'acide fluorhydrique en une quantité suffisante pour transformer complètement le trifluorure de bore en acide tétrafluoroborique,
   b) à ajouter ensuite à la solution obtenue de l'eau et une quantité suffisante d'acide borique pour neutraliser l'éventuel excès d'acide fluorhydrique et obtenir une teneur en acide borique comprise entre 0,1 et 8 % en poids et une teneur en acide fluoroborique supérieure à 49 % en poids, puis
   c) à mettre la solution obtenue en contact avec un charbon actif en une quantité suffisante et pendant un temps suffisant pour amener la teneur en carbone organique de la solution à 30 ppm ou moins, et
   d) à séparer le charbon actif de la solution incolore d'acide tétrafluoroborique.

2.   Procédé selon la revendication 1, dans lequel on utilise un excès d'HF allant de 2 à 5 % par rapport à la stoechiométrie.

3.   Procédé selon la revendication 1 ou 2, dans lequel on utilise une solution aqueuse d'HF dont la concentration est au moins de 70 % en poids.

4.   Procédé selon l'une des revendications 1 à 3, dans lequel l'acide borique est ajouté en une quantité telle que sa teneur dans la solution d'acide tétrafluoroborique soit comprise entre 0,1 et 8 %.

## Claims

1.   Process for the manufacture of an aqueous tetrafluoroboric acid solution from a coloured aqueous boron trifluoride hydrate effluent, characterized in that it consists:

   a) in adding an aqueous hydrofluoric acid solution to the effluent in an amount sufficient to completely convert the boron trifluoride to tetrafluoroboric acid,
   b) in subsequently adding, to the solution obtained, water and a sufficient amount of boric acid to neutralize the possible excess hydrofluoric acid and to obtain a boric acid content of between 0.1 and 8% by weight and a fluoroboric acid content of greater than 49% by weight, then
   c) in bringing the solution obtained into contact with an active charcoal in a sufficient amount and for a sufficient time to bring the content of organic carbon in the solution to 30 ppm or less, and
   d) in separating the active charcoal from the colourless tetrafluoroboric acid solution.

2.   Process according to Claim 1, in which use is made of an excess of HF ranging from 2 to 5% with respect to stoichiometry.

3. Process according to Claim 1 or 2, in which use is made of an aqueous HF solution with a concentration of at least 70% by weight.

4. Process according to one of Claims 1 to 3, in which the boric acid is added in an amount such that its content in the tetrafluoroboric acid solution is between 0.1 and 8%.

**Patentansprüche**

1. Verfahren zur Herstellung einer wäßrigen Tetrafluorborsäurelösung aus einem wäßrigen mit Bortrifluoridhydrat gefärbten Abwasser, dadurch gekennzeichnet, daß es besteht aus:

   a) dem Abwasser eine wäßrige Fluorwasserstoffsäurelösung in ausreichender Menge zuzusetzen, um das Bortrifluorid vollständig in Tetrafluorborsäure umzusetzen,
   b) anschließend der so erhaltenen Lösung Wasser und eine Menge Borsäure zuzusetzen, die ausreicht, um den eventuellen Überschuß an Fluorwasserstoffsäure zu neutralisieren und eine Borsäurekonzentration zwischen 0,1 und 8 Gew.-% und eine Fluorborsäurekonzentration von mehr als 49 Gew.-% zu erhalten, danach
   c) die so erhaltene Lösung mit einer ausreichenden Menge Aktivkohle während einer ausreichenden Zeit in Berührung zu bringen, um den Gehalt der Lösung an organischem Kohlenstoff auf 30 ppm oder weniger einzustellen, und
   d) die Aktivkohle aus der farblosen Tetrafluorborsäurelösung zu entfernen.

2. Verfahren nach Anspruch 1, bei dem man einen stöchiometrischen Überschuß an HF von 2 bis 5 % verwendet.

3. Verfahren nach Anspruch 1 oder 2, bei dem man eine wäßrige mindestens 70 gewichtsprozentige Lösung von HF verwendet.

4. Verfahren nach einem der Ansprüche 1 bis 3, bei dem die Borsäure in einer solchen Menge zugesetzt wird, daß ihr Gehalt in der Tetrafluorborsäurelösung zwischen 0,1 und 8 % liegt.